# EUROPEAN PATENT SPECIFICATION

(11) **EP 3 086 951 B1**
(45) Date of publication and mention of the grant of the patent: **23.10.2019**
(21) Application number: 14830714.3
(22) Date of filing: 19.12.2014
(51) Int. Cl.: B60C 9/00, B60C 11/00, B60C 9/20, B60C 9/22, B60C 9/02

(54) **TYRE FOR HEAVY LOAD VEHICLE WHEELS**
REIFEN FÜR SCHWERLASTFAHRZEUGRÄDER
PNEU POUR ROUES DE VÉHICULES DE TYPE POIDS LOURD

(30) Priority: 23.12.2013 IT MI20132183
(43) Date of publication of application: 02.11.2016
(73) Proprietor: Pirelli Tyre S.p.A., 20126 Milano (IT)
(72) Inventor: DAGHINI, Guido, Luigi, 20126 Milano (IT); TRESOLDI, Stefano, 20126 Milano (IT); BALLABIO, Omar, 20126 Milano (IT)
(74) Representative: Porta & Consulenti Associati S.p.A.
(86) International application number: PCT/IB2014/067120
(87) International publication number: WO 2015/097609

(56) References cited:
- EP-A1- 0 621 143
- WO-A1-2013/098738
- JP-A- H0 641 881
- US-A1- 2005 183 808

## Description

The present invention relates to a tyre for heavy load vehicle wheels, like lorries, buses, trailers or the like and in general for vehicles in which the tyre is subjected to a high load. The present invention can, however, also be applied to light truck wheels, like vans or similar.

WO 2012/017399 and WO2012/164442 to the same Applicant describe tyres for heavy load vehicle wheels.

Other tyres for heavy load vehicle wheels are described in US 7,594,380 and US 8,166,741. In particular, these documents describe tyres whose belt structure comprises reinforcing cords each having a core made of non-metallic material and a plurality of metallic wires, single or twisted together to form strands of metallic wires, helically wound around the core. Such reinforcing cords comprising both non-metallic wires and metallic wires are also identified by the term "hybrid".

"Hybrid" cords are also used in tyres for motorcycles and automobiles. See for example WO 2013/098738 to the same Applicant and DE 10 2004 036129, JP 6 297905, US 3,977,174, US 2003/0051788.

In the present description and in the subsequent claims, the following definitions apply.

The expression "tyre for heavy and/or light load vehicle wheels", is used to indicate a tyre intended to be used in a vehicle belonging to categories M2, M3, N2, N3 and 02-04, according to "ECE Consolidated Resolution of the Construction of vehicles (R.E. 3), Annex 7, Classification and definition of power driven vehicles and trailers", or to categories M3, N2, N3, O3, O4 according to "ETRTO Engineering design information" (2010 edition), section "General Information", pages G15 and G16, chapter "International codes for wheeled vehicle classification as UN/ECE 29/78 and Directive 2003/37".

By "equatorial plane" of the tyre it is meant a plane perpendicular to the rotation axis of the tyre and that split the tyre into two symmetrically equal parts.

The terms "radial" and "axial" and the expressions "radially inner/outer" and "axially inner/outer" are used with reference to the radial direction and to the axial direction of the tyre. The terms "circumferential" and "circumferentially", on the other hand, are used with reference to the direction of the annular extension of the tyre, which corresponds to a direction lying on a plane parallel to the equatorial plane of the tyre.

The term "elastomeric material" is used to indicate a composition comprising at least one elastomeric polymer and at least one reinforcing filler. Preferably, such a composition also comprises additive like, for example, a cross-linking agent and/or a plasticizer. Thanks to the presence of the cross-linking agent, such a material can be cross-linked through heating.

The term "cord", or the expressions "reinforcing cord" or "reinforcing element" are used to indicate an element consisting of one or more elongated elements coated by, or incorporated in, a matrix of elastomeric material. According to the circumstances and the specific applications, the aforementioned elongated elements are made of textile and/or metallic material.

The expression "reinforced band-like element" is used to indicate an elongated composite having, in a cross section thereof, a flat-shaped profile and comprising one or more reinforcing cords extending parallel to the longitudinal extension of the composite. Such a reinforced band-like element is also commonly called "strip-like element".

The expression "stone-guard layer" is used to indicate a layer specifically provided in a radially outer position with respect to the belt structure of the tyre to protect the latter (and the underlying carcass structure) from undesired objects or foreign agents (for example stones and/or gravel and/or water and/or humidity) and/or from roughness of the road surface. Such a stone-guard layer comprises a plurality of cords parallel to one another and extending according to a substantially circumferential direction.

By "diameter" of a cord it is meant the diameter measured as prescribed by the method BISFA E10 (The International Bureau For The Standardization Of Man-Made Fibres, Internationally Agreed Methods For Testing Steel Tyre Cords, 1995 edition).

The expression "ultimate tensile strength" of a reinforcing cord is used to indicate the percentage elongation at which breaking occurs, evaluated with the method BISFA E6 (The International Bureau For The Standardization Of Man-Made Fibres, Internationally Agreed Methods For Testing Steel Tyre Cords, 1995 edition).

US 2005/0183808 A1 describes hybrid layered cables to be used to reinforce a crown protection ply of tyre for heavy vehicles so as to prevent penetration of foreign bodies into the working crown plies. The hybrid layered cable comprises a non-metallic internal layer and an unsaturated external layer comprising strands. Each strand is at least in part metallic. The strands are wound in helix around the internal layer.

EP 0 621 143 A1 describes a pneumatic tyre whose belt comprises parallel hybrid cords, each hybrid cord comprising at least one aramid strand and at least one steel strands twisted together, said at least one aramid strand being made of aramid fibre filaments twisted together, and said at least one steel strand being made of a steel monofilament.

JP H06 41881 A describes a composite cord made by twisting a sheath composed of 2-5 steel filaments around a core composed of a filament made of an organic fiber. The sheath filaments are disposed in a line adjacent to one another along the peripheral surface of the cord.

A tyre for light or heavy load vehicle wheels, like lorries, buses, tractors-trailers, trucks, vans or similar, is typically subjected to particularly harsh conditions in use since they travel under even very heavy loads in sometimes hostile environments (due for example to very low or very high temperatures, dusty or muddy road surfaces, or surfaces from which various kinds of roughness projects, etc.) and must therefore possess characteristics of integrity and structural resistance to particularly high stress. Even when used in an urban environment, and therefore not in a particularly hostile environment, the tyre must still withstand various kinds of stresses, like for example going up/down sidewalks and/or other similar obstacles.

Such a tyre can also be used in wheels for vehicles intended for long non-urban and/or motorway journeys: in this case, the tyre must offer excellent characteristics in terms of driving comfort, both when mounted on a vehicle for transporting people (buses) and when mounted on a vehicle for transporting goods (lorries, trucks, etc.). A driver of a modern heavy and/or light load vehicle, indeed, appreciates a stable behaviour of his vehicle, which requires minimal corrections (or no correction at all) when passing over small roughness on a straight line, but that at the same time responds quickly and/or progressively during cornering, so as to have, in all circumstances, the correct precision of driving. The latest generation of heavy and/or light load vehicles also require better drivability because, in order to meet the market requirements, they are configured to carry greater loads, thanks to higher engine powers, improved suspension, different weights distribution between tractor and trailer, etc.

For reasons of cost and environmental protection, tyres for heavy and/or light load vehicle wheels must also ensure a high degree of reconstructibility. In other words, it must be possible to remove the tread band from the main structure of the tyre (a requirement that occurs typically when the tread band reaches conditions of high wear or in any case is particularly damaged) in order to be able to apply a new tread band to the aforementioned main structure (provided that such as main structure still possesses the necessary characteristics of integrity and structural strength).

For a correct design of tyres intended for wheels of transportation vehicles, and in particular wheels of heavy load vehicles, all of the requirements discussed above must be taken into account, these requirements being increasingly felt and appreciated by users of vehicles and/or by the fleet managers.

Often, the characteristics discussed above are in mutual conflict. For example, in order to be able to offer the necessary characteristics of integrity and structural strength, the main inner structure of such tyres is typically strengthened and stiffened by providing specific reinforcing layers each comprising one or more suitably oriented reinforcing cords. Such reinforcing cords, if on the one hand provide the tyre with particular resistance to stresses, on the other hand can penalise the driving comfort, since they facilitate a rapid transfer of the stresses generated by travel on rough and/or uneven ground to the carcass structure, and thus to the vehicle driver compartment.

The Applicant has observed that the behaviour of tyres for heavy and/or light load vehicle wheels in terms of integrity/structural strength and comfort is influenced in a non negligible way by the particular type and configuration of the stone-guard layer and/or of the main belt layers and, more specifically, by the particular type and construction of the reinforcing cords used in the aforementioned layers.

The Applicant has been producing for a long time tyres for heavy load vehicle wheels having a stone-guard layer including a plurality of high elongation (HE) metallic cords, wherein each cord is formed by twelve NT (Normal Tensile) steel wires having a low diameter (equal to about 0.22 mm). The steel wires are divided into three strands that are twisted together, each strand comprising four steel wires twisted together. Such a cord thus has a construction that is typically identified by the abbreviation 3X4X0.22HE. Hereafter, such a cord will be indicated as cord A.

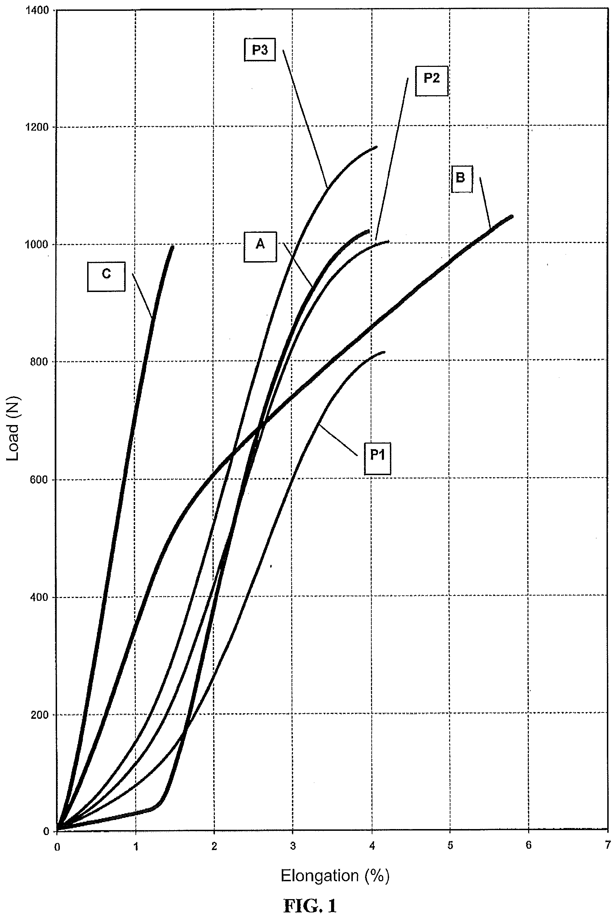

As known, cords A have low rigidity at low loads and high rigidity at medium-high and high loads, as can be seen in the load-percentage elongation graph of figure 1 (curve A) obtained by subjecting the naked cord (i.e. without elastomeric material) to traction according to the aforementioned method BISFA E6. The sudden change in rigidity between low loads and medium-high loads can be identified in the curve A at the bend that is clearly visible for load values lower than 50 N. Such a cord is known to be able to ensure good characteristics of integrity/structural strength and comfort.

The Applicant has however found that making a stone-guard layer of the type described above involves a complex and expensive construction of the cord, requiring, amongst other things, a large number of metallic wires, this impacting greatly on the weight and cost of the tyre.

The Applicant has also found that the use of metallic wires of small diameter inevitably leads to problems in terms of reconstructibility. Inside the cord, indeed, gaps without elastomeric material are formed between the various metallic wires. If there is a defect or a hole in the tread band, water or humidity can penetrate into such gaps. Such water/humidity easily reaches the steel wires to then propagate, due to the circumferential arrangement thereof and to the rolling of the tyre during travel, over the entire circumferential extension of the stone-guard layer, causing a widespread corrosion that in turn over time produces infiltration of water/humidity in the underlying main structure of the tyre, thus making the tyre unsuitable for reconstruction and basically reducing the useful life of the tyre.

The Applicant in the past observed that, in order to reduce the cost and weight of the cords, it was advisable to reduce the number of metallic wires used in the cords of the stone-guard layer and that, in order to reduce the problems of reconstructibility, it was advisable to use metallic wires of greater diameter with respect to those used in the HE cords described above. The Applicant however observed that the reduction of the number of metallic wires had to be kept within certain limits so as not to penalise the capability of the cord to adequately withstand the loads which the tyre is subjected to during use.

In this regard, the Applicant produced alternative types of tyres for heavy load vehicle wheels.

In a first type, the stone-guard layer comprises a plurality of high elongation (HE) metallic cords each of which formed of five preformed NT (Normal Tensile) steel wires twisted together and having a diameter equal to about 0.35 mm. Such a cord thus has a construction that is typically identified with the abbreviation 5X0.35HEP. Hereafter, such a cord will be indicated as cord B.

In an alternative type, the stone-guard layer comprises a plurality of metallic cords each of which formed of five preformed NT (Normal Tensile) steel wires of diameter equal to about 0.30 mm. Three of the five wires are arranged centrally, whereas the other two are twisted onto the aforementioned three wires. Such a cord thus has a construction that is typically identified with the abbreviation 3+2X0.30. Hereafter, such a cord will be indicated as cord C.

The Applicant has however observed that, unlike the cords A, the cords B and C have a high rigidity also at low loads, as can be seen in the graph of figure 1 (curves B and C, also obtained by subjecting naked cords to traction according to the aforementioned international method BISFA E6). Such high rigidity at low loads is at the expense of comfort.

The Applicant has considered the problem of providing a tyre for heavy and/or light load vehicle wheels having a belt structure capable of ensuring the necessary requirements of integrity, structural strength, reconstructibility, low cost and weight, improving at the same time the comfort.

The Applicant has verified that, typically, the loads which tyres for heavy and/or light load vehicle wheels are subjected to in the various conditions of use are comprised between 10% and 40% of the ultimate tensile strength of the naked cords used in the belt structure. In particular, the Applicant has verified that in normal conditions of use the upper limit of 40% is never exceeded, whereas loads lower than the lower limit of 10% are typically absorbed by the elastomeric material that surrounds the cords and by the configuration taken up by the tyre after vulcanization and inflation. Hereafter, the aforementioned range of values 10% - 40% will also be indicated as "range of load values of interest".

The Applicant has studied the behaviour of the tyres that comprise, in the respective stone-guard layers, the cords A, B and C described above by analysing the shape of the curves A, B and C in the aforementioned range of load values of interest.

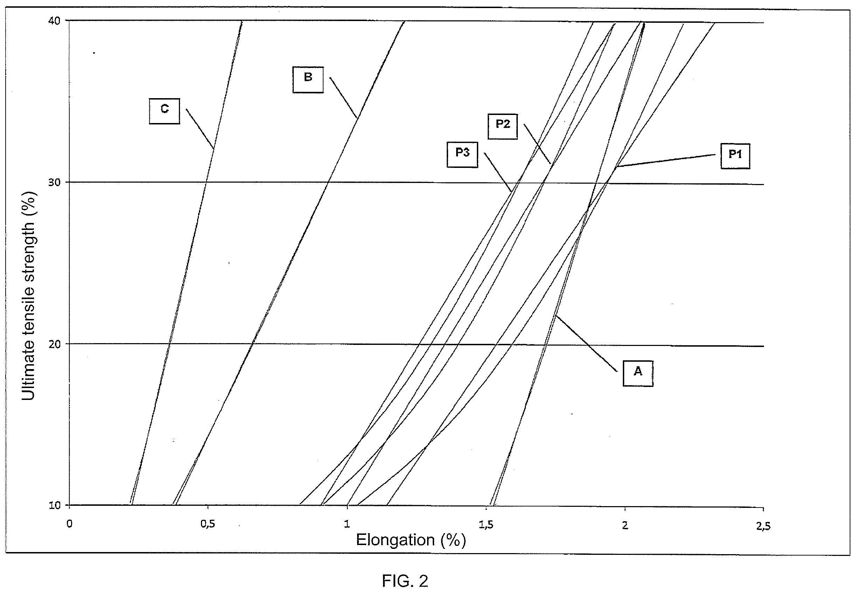

The Applicant has observed that, in the aforementioned range of load values of interest, the curves A, B and C are all very steep and substantially rectilinear. This can be clearly seen in the graph of figure 2, which has been obtained from that of figure 1 showing in the ordinate the percentage load which is necessary to reach the breaking point.

With reference to figure 2, the Applicant has found that, in the aforementioned range of load values of interest, the points of the curves A, B and C are interpolated by straight lines having a high angular coefficient (as known, the angular coefficient is indicative of the slope of the straight line that interpolates the points of a curve). In particular, the Applicant has calculated for each of the curves A, B and C an angular coefficient value greater than 30. Such a high angular coefficient implies a high rigidity of the cords A, B and C, which thus provide the tyre with the desired characteristics of integrity and structural strength. Whereas, however, the cord A has a high rigidity only at high percentage elongation values (greater than 1.5%), thus ensuring good characteristics of comfort, the cords B and C also have high rigidity at low percentage elongation values (starting from values lower than 0.5%), penalizing comfort.

The Applicant has also found that, for the aforementioned load values, the straight lines that interpolate the curves A, B and C all have a linear correlation coefficient r² substantially equal to 1. In particular, the Applicant has calculated for each of the curves A, B and C a linear correlation coefficient value greater than 0.990 (the linear correlation coefficient is calculated obtaining the equations of the straight lines that interpolate all of the points of the curve). Such a high linear correlation coefficient implies that the cords A, B and C, when subjected to increasing loads, elongate according to a substantially linear law, thus being not particularly soft.

The Applicant has realised that in the range of load values of interest, the behaviour of the tyre in terms of drivability and comfort is influenced both by the rigidity (and thus by the angular coefficient, or slope, of the load-percentage elongation curve) of the naked cords used in the stone-guard layer and/or in the main belt layers and the linear correlation coefficient of the aforementioned curve. In particular, the Applicant has realised that it is possible to achieve excellent characteristics of drivability and comfort using cords having a rigidity lower than that of the cords A, B and C described above (i.e. characterised by a load-percentage elongation curve that is less steep with respect to the curves A, B and C) and a non linear load-elongation behaviour (i.e. with a load-percentage elongation curve having a linear correlation coefficient that is lower than that of curves A, B and C). Such cords, indeed, according to the Applicant, would be softer than those comprising only metallic wires, to the benefit of comfort.

The Applicant has also observed that, in order to avoid problems in terms of reconstructibility (and therefore to avoid the start and propagation of corrosion in the main structure of the tyre) it is advantageous to use cords having non-metallic wires in the stone-guard layer of the tyres. According to the Applicant, the use of non-metallic wires also does not penalize comfort and allows an advantageous reduction in weight and cost of the tyre.

The Applicant has however observed that, in order to ensure adequate integrity and structural strength, it is necessary to still provide in the aforementioned cords a certain number of metallic wires.

The Applicant has therefore realised that the use in the stone-guard layer and/or in the main belt layers of cords provided with non-metallic wires and with metallic wires suitably oriented with respect to the non-metallic wires would have allowed the desired integrity and structural strength and the desired comfort in the range of load values of interest to be obtained.

In this regard, the Applicant has thought to use, in the stone-guard layer and/or in the main belt layers of a tyre for heavy and/or light load vehicle wheels, cords having a core made of non-metallic material and a plurality of metallic wires helically wound around the core with a predetermined winding pitch.

The Applicant has found that such cords are characterised by a load-percentage elongation curve having an angular coefficient and a linear correlation coefficient that are lower than those of the cords A, B and C described above. Therefore, they would allow to obtain the expected results in terms of comfort. The Applicant has carried out a number of indoor and outdoor tests (some of which will be discussed as examples hereinafter) which have confirmed the expected good behaviour of the cords, and therefore of the belt structure that incorporates them, in terms of integrity, structural strength and comfort.

The Applicant has also found an excellent behaviour of the tyre in terms of progressive response, such a behaviour being certainly better than that of tyres comprising stone-guard layers with cords A, B and C,. The tests carried out by the Applicant have indeed highlighted how, at the traction step (and therefore with variable loads from zero to medium-high values) the tyre reacts gradually and less suddenly with respect to tyres comprising cords of the known type.

The different behaviour of the cords tested by the Applicant is reproduced in the graphs of figure 1 and 2 by the curves P1, P2 and P3 which refer to three different constructions of naked cords (hereafter indicated as cords P1, P2 and P3). It should be noted how, in the range of load values of interest, such curves substantially differ from the aforementioned curves A, B and C.

Without being bound to any interpretive theory, according to the Applicant the good behaviour found in the tests in terms of comfort and progressive response is attributable to at least two different reasons. A first reason is correlated to the fact that the winding of the metallic wires on the non-metallic core of the cords defines in the cord a composite that, during travel, works like a homogeneous complex that responds gradually and evenly to the different loads which the tyre is subjected to, without having peaks or sudden variations in deformation as the load varies. The Applicant considers that such a gradual and even response is in turn attributable to the fact that the cord is softer and is capable of absorbing bumps better than cords having only metallic material (as can be deduced by observing the larger area subtended by the curves P1, P2 and P3 in the graph of figure 2 with respect to that of the curves A, B and C), releasing the energy absorbed at each time more gradually. A second reason is correlated to the particular shape of the load-percentage elongation curves of the naked cords in the load range of interest, and in particular to the fact that such curves are not rectilinear (linear correlation coefficient lower than about 0.990), are not very steep (angular coefficient lower than about 30) and advantageously have an upward-facing concavity. The Applicant considers that the non-excessive slope and the upward-facing concavity contribute to enhancing comfort and progressive response.

The present invention therefore relates to a tyre for heavy load vehicle wheels, as disclosed in claim 1. The tyre comprises:
- a carcass structure;
- a belt structure arranged in a radially outer position with respect to the carcass structure;
- a tread band arranged in a radially outer position with respect to said belt structure.

The belt structure comprises at least one belt layer comprising a plurality of reinforcing cords inclined with respect to a substantially circumferential direction.

Each reinforcing cord of said plurality of reinforcing cords comprises:
- a core made of non-metallic material, and
- a plurality of metallic wires substantially parallel to one another and helically wound around said core with a predetermined winding pitch.

Said metallic wires are arranged around said core so that, in any cross section of the reinforcing cord, they are located at just an angular portion of an ideal circumference that circumscribes the core.

Said reinforcing cord, when subjected to variable loads of between 10% and 40% of the ultimate tensile strength thereof, undergoes an elongation that varies according to a curve having, in a load-percentage elongation graph, a linear correlation coefficient lower than 0.990, more preferably lower than about 0.985, even more preferably lower than about 0.980.

The points of said curve are interpolated by a straight line having an angular coefficient lower than about 30, more preferably lower than about 25, even more preferably lower than about 22.

Preferably, said curve has an upward-facing concavity.

Said at least one belt layer is a stone-guard layer arranged in the belt structure in radially outermost position.

Preferably, said reinforcing cord, when subjected to a load comprised between 10% and 40% of the ultimate tensile strength thereof, undergoes a percentage elongation greater than about 0.7%, more preferably greater than about 0.8%.

Preferably, said reinforcing cord, when subjected to a load comprised between 10% and 40% of the ultimate tensile strength thereof, undergoes a percentage elongation lower than about 2.5%, more preferably lower than about 2.3%.

In preferred embodiments, said reinforcing cord, when subjected to variable loads of between 10% and 40% of the ultimate tensile strength thereof, undergoes a percentage elongation which is variable between about 0.7% and about 2.5%, more preferably comprised between about 0.8% and about 2.3%.

Preferably, said angular portion is defined by an angle lower than about 270°, more preferably lower than about 190°.

Preferably, said angular portion is defined by an angle greater than about 40°, more preferably greater than about 130°.

In preferred embodiments, said angular portion is defined by an angle comprised between about 40° and about 270°, more preferably between about 130° and about 190°.

For example, said angle is equal to about 150°.

Preferably, the diameter of said core, the diameter of said metallic wires and the winding pitch of said metallic wires are selected so that the metallic wires are inclined with respect to said substantially circumferential direction by an angle greater than about 10°, more preferably greater than about 15°.

Preferably, the diameter of said core, the diameter of said metallic wires and the winding pitch of said metallic wires are selected so that the metallic wires are inclined with respect to said substantially circumferential direction by an angle lower than about 40°, more preferably lower than about 30°.

In preferred embodiments, the diameter of said core, the diameter of said metallic wires and the winding pitch of said metallic wires are selected so that the metallic wires are inclined with respect to said substantially circumferential direction by an angle comprised between about 10° and about 40°, more preferably between about 15° and about 30°.

Preferably, said metallic wires are in a number such as not to completely surround the core.

Preferably, the number of said metallic wires greater than two.

Preferably, the number of said metallic wires is lower than eight.

In particularly preferred embodiments, the number of said metallic wires is equal to five.

Preferably, said metallic wires are in a condition of substantially mutual contact.

Preferably, the diameter of said metallic wires is greater than about 0.22 mm, more preferably greater than or equal to about 0.25 mm.

Preferably, the diameter of said metallic wires is lower than about 0.32 mm, more preferably lower than or equal to about 0.30 mm.

In preferred embodiments, the diameter of said metallic wires is comprised between about 0.22 mm and about 0.32 mm, more preferably between about 0.25 mm and about 0.30 mm, the extreme values being included.

For example, the diameter of said metallic wires is, in a first embodiment equal to about 0.25 mm, in a second embodiment equal to about 0.28 mm, in a third embodiment equal to about 0.30 mm.

Preferably, said reinforcing cord has a diameter greater than about 0.5 mm, more preferably greater than about 0.8 mm.

Preferably, said reinforcing cord has a diameter lower than about 2.5 mm, more preferably lower than about 1.5 mm.

In preferred embodiments, said reinforcing cord has a diameter comprised between about 0.5 mm and about 2.5 mm, more preferably lower than about 1.5 mm.

For example, said reinforcing cord has a diameter equal to about 1.06 mm in a first embodiment thereof, equal to about 1.09 in a second embodiment thereof and equal to about 1.13 in a third embodiment thereof.

Preferably, said winding pitch is greater than about 3 mm, more preferably greater than about 5 mm.

Preferably, said winding pitch is lower than about 16 mm, more preferably lower than about 12.5 mm.

In preferred embodiments, the aforementioned winding pitch is comprised between about 3 mm and about 16 mm, more preferably between about 5 mm and about 12.5 mm.

For example, the aforementioned winding pitch is equal to about 10 mm.

Preferably, said core comprises at least one twisted elongated element.

Said at least one elongated element can for example be a textile wire.

Preferably said core does not have any elastomeric coating, i.e. it consists only of one or more naked twisted elongated elements.

More preferably, said core comprises at least two elongated elements twisted on one another with a predetermined twisting pitch.

Preferably, said core comprises a fibrous material. Said fibrous material can comprise an inorganic material preferably selected from glass and/or carbon fibres and/or combinations thereof, or an organic material preferably selected from: polyethylene terephthalate, polyamide, aromatic polyamide, polyvinyl ester, polyvinyl alcohol, polyethylene naphthalate, polyketone, yarns from regenerated cellulose, cotton and hybrids or mixtures thereof.

In preferred embodiments of the present invention, said organic material comprises polyethylene terephthalate.

Preferably, the belt structure comprises, in a radially inner position with respect to said at least one stone-guard layer, a first main belt layer.

In preferred embodiments, said first main belt layer comprises a plurality of reinforcing elements oriented along a first direction that is inclined with respect to said substantially circumferential direction.

Preferably, the belt structure also comprises, in a radially outer position with respect to said first main belt layer, a second main belt layer.

In preferred embodiments, said second main belt layer comprises a plurality of reinforcing elements oriented along a second direction that intersects said first direction.

Preferably, each reinforcing element of said first main belt layer and second main belt layer consists of a respective reinforcing cord of said plurality of reinforcing cords.

Preferably, the belt structure comprises at least one reinforced band-like element arranged in radially outer position with respect to said second main belt layer.

Between the aforementioned main belt layers it is possible to provide a reinforced band-like element as described above, preferably at at least one axial end portion of said main belt layers.

Preferably, said at least one reinforced band-like element comprises a plurality of reinforcing elements arranged according to a substantially circumferential direction.

More preferably, two reinforced band-like elements are provided, each reinforced band-like element of said two reinforced band-like elements being arranged at a respective axial end portion of said second main belt layer.

Preferably, said at least one stone-guard layer extends between said two reinforced band-like elements.

More preferably, said at least one stone-guard layer extends at least partially over said at least one reinforced band-like element, more preferably over at least half of said at least one reinforced band-like element, even more preferably substantially over the entire extension of said at least one reinforced band-like element.

Preferably, said stone-guard layer is arranged in radially outer position with respect to said second main belt layer.

Further characteristics and advantages of the tyre of the present invention will become clearer from the following detailed description of preferred embodiments thereof, made with reference to the attached drawings. In such drawings:
- figure 1 is a load/percentage elongation graph of six different naked cords, three used in known tyres (curves A, B and C) and three used in the tyre of the present invention (curves P1, P2 and P3);
- figure 2 is an enlarged portion of the graph of figure 1 in which, however, on the ordinate the percentage load necessary to reach the breaking point is indicated, in the range of load values of interest;

- figure 3 is a schematic partial cross section view of a portion of a tyre according to an embodiment of the present invention;
- figure 4 is a perspective view of a reinforcing cord used in the stone-guard layer of the tyre of figure 3;
- figure 5 is an enlarged view of a cross section of the reinforcing cord of figure 4.

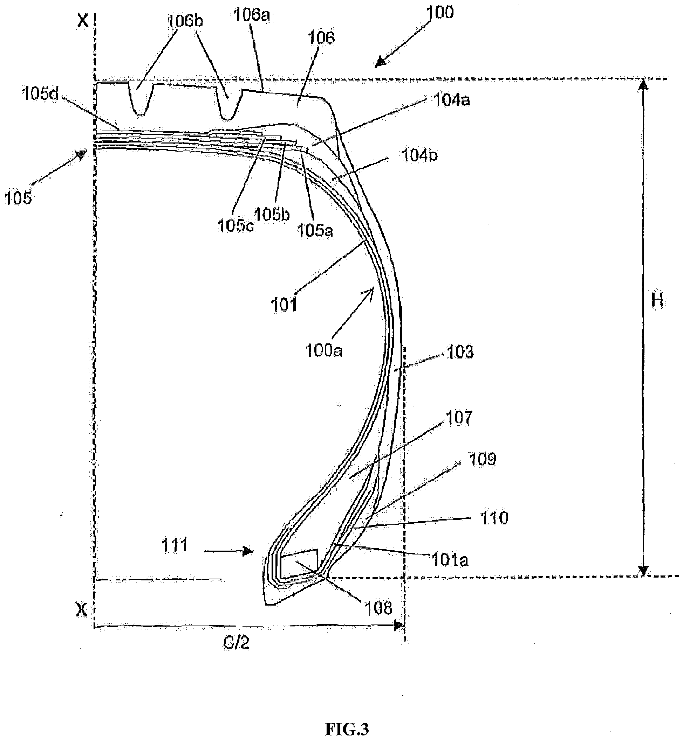

For the sake of simplicity, figure 3 shows only a part of a tyre 100 in accordance with the present invention, the remaining part that is not shown being substantially identical and being arranged symmetrically with respect to the equatorial plane X-X of the tyre. In the various figures, the same reference numerals identify parts that are the same or functionally equivalent.

The tyre of figure 3 is a tyre for light or heavy load vehicle wheels, like lorries, buses, trailers, trucks, vans, and in general for vehicles in which the tyre is subjected to a high load. Preferably, such a tyre 100 is configured to be mounted on rims having a diameter greater than or equal to 17.5".

The tyre 100 comprises a carcass structure 100a comprising at least one carcass ply 101, the opposite side edges of which are associated with respective bead structures 111 comprising a bead core 108 and at least one bead filler 107. The association between said at least one carcass ply 101 and said bead structure 111 is typically obtained by turning the opposite side edges of said at least one carcass ply 101 around said bead core 108 and said at least one bead filler 107 so as to form a carcass turn up 110.

The at least one carcass ply 101 generally comprises a plurality of carcass ply reinforcing elements arranged parallel to one another and at least partially coated with a layer of cross-linked elastomeric material. These carcass ply reinforcing elements, in particular in the case of tyres for lorries, are usually made of metallic cords, preferably made of steel. Textile fibres like, for example rayon, nylon, polyester or polyethylene terephthalate or mixtures thereof can be used for some types of tyres (e.g. for light trucks).

The at least one carcass ply 101 is usually of the radial type, i.e. it incorporates reinforcing elements arranged in a direction substantially perpendicular with respect to the circumferential direction.

A belt structure 105 is applied in a radially outer position with respect to said at least one carcass ply 101. The belt structure 105 will be described in greater detail in the rest of this description.

A tread band 106 is circumferentially applied in a radially outer position with respect to said belt structure 105.

In the embodiment of figure 3, an insert 104a comprising a cross-linked elastomeric material is arranged at the area where the side edges of the tread band 106 connect to a sidewall 103 applied in an axially outer position with respect to the carcass ply 101 and that extends from the bead structure 111 to the tread band 106. The insert 104a can also be only interposed between the carcass ply 101, the belt structure 105 and the sidewall 103. An under-belt insert 104b can be provided to support the axial ends of the belt structure 105.

The side edges of the tread band 106 are connected to the sidewall 103.

On the outside, the tread band 106 has a rolling surface 106a configured to contact the ground. A number of circumferential grooves 106b, which can be connected by transversal notches (not shown), define a tread pattern that comprises a plurality of ribs and/or blocks of various shapes and sizes, distributed over the rolling surface 106a.

In the embodiment of figure 3, an elastomeric layer 102, generally known as liner, is provided in a radially inner position with respect to the carcass ply 101. The elastomeric layer 102 provides the necessary impermeability to the inflation air of the tyre 100.

Preferably, the tyre 100 according to the present invention has an aspect ratio (H/C) comprised between 0.35 and 1.1, more preferably comprised between 0.45 and 1.0.

Said aspect ratio is the ratio between the height of the cross section of the tyre H, i.e. the radial distance from the nominal diameter of the rim to the outer diameter of the tyre at the equatorial plane thereof, and the width C (in figure 3, the size C/2 has been indicated, i.e. half of C) of the cross section of the tyre, i.e. the maximum linear distance parallel to the rotation axis of the tyre between the outer surfaces of the sidewalls (in accordance with E.T.R.T.O. 2010 edition, pages G3 and G4).

The belt structure 105 typically comprises two main belt layers 105a and 105b that are radially juxtaposed and that incorporate reinforcing cords. Said reinforcing cords are parallel to one another in each main belt layer and intersect the reinforcing cords of the adjacent main belt layer, and are inclined preferably symmetrically with respect to the circumferential direction of the tyre, at an angle of between 10° and 70°, preferably between 12° and 40°. The reinforcing cords are coated with a cross-linked elastomeric material.

Preferably, said reinforcing cords have a density of between 30 cords/dm and 80 cords/dm, preferably between 40 cords/dm and 65 cords/dm, measured on said two main belt layers 105a and 105b, in a circumferential direction, close to the equatorial plane X-X of the tyre 100.

Preferably, the belt structure 105 of the tyre 100 also comprises at least one reinforced band-like element 105c called "zero degrees reinforcing strip-like element", "lateral reinforcing strip-like element" or simply "reinforcing strip-like element".

Preferably, a reinforced band-like element 105c is arranged in a radially outer position with respect to the second main belt layer 105b and at each of the axial end portions of the second main belt layer 105b, thus defining a third belt layer.

Said reinforced band-like element 105c generally incorporates a plurality of reinforcing elements, typically metallic cords, preferably made of steel, coated with a cross-linked elastomeric material. Such reinforcing elements of the reinforced band-like element 105c are oriented in a substantially circumferential direction, thus forming an angle of a few degrees (for example an angle of between about 0° and 6°) with respect to the equatorial plane X-X of the tyre 100.

The reinforced band-like element 105c can be made of a single winding of a reinforced rubber-coated band, in which a head end of the rubber-coated band is radially juxtaposed over a tail end of the rubber-coated band to form an overlap. Alternatively, the reinforced band-like element 105c can be made of two or more radially juxtaposed windings of a reinforced rubber-coated band.

As an alternative to the configurations described above, the reinforced band-like element 105c can be made of axially adjacent spiralling of a reinforced rubber-coated band.

In specific embodiments, the reinforcing elements of the reinforced band-like element 105c are arranged in the rubber-coated band with a density comprised between 30 and 80 cords/dm, preferably between 40 and 65 cords/dm.

Preferably, the width of the reinforced band-like element 105c is comprised between about 10% and about 20% of the maximum width of the belt structure 105 (i.e. of the width of the main belt layer most extended in the lateral direction). In some embodiments, the width of the reinforced band-like element 105c can be comprised between about 12.0 mm and about 60.0 mm. In specific embodiments, the thickness of the reinforced band-like element 105c is comprised between about 1 mm and about 1.5 mm.

In embodiments not shown in the drawings, the belt structure 105 could comprise at least one additional belt layer arranged between the at least one carcass ply 101 and the radially innermost main belt layer 105a. Said additional belt layer comprises reinforcing elements parallel to one another. In this additional layer the reinforcing elements could be inclined with respect to a circumferential direction of the tyre by a greater angle with respect to that used in the main belts, typically between about 60° and about 90°, preferably between about 65° and about 80°.

A stone-guard layer 105d is applied as a radially outermost layer to the belt structure 105. The stone-guard layer 105d is thus applied in a radially outer position with respect to the radially outermost main belt layer 105.

The stone-guard layer 105d comprises a plurality of reinforcing cords 11 arranged parallel to one another and inclined with respect to a circumferential direction of the tyre by an angle of between 10° and 60°, preferably between 12° and 40°. The cords 11 of the stone-guard layer 105d are typically coated with a cross-linked elastomeric material.

According to a preferred embodiment, the stone-guard layer 105d extends axially between the two axially opposite reinforced band-like elements 105c and is arranged so that each of the opposite axial end portions of the stone-guard layer 105d extends radially outside at least part of each of the two reinforced band-like elements 105c. In this way, the stone-guard layer 105d partially covers the reinforced band-like elements 105c, providing them with an advantageous and important protection.

Preferably, the stone-guard layer 105d covers each reinforced band-like element 105c for at least half of the width of the latter. In an embodiment, the stone-guard layer 105d covers substantially the entire reinforced band-like element 105c (for example at least 80% of the reinforced band-like element 105c).

Preferably, the reinforcing elements of the reinforced band-like element 105c have a density of between 30 cords/dm and 80 cords/dm, preferably between 35 cords/dm and 65 cords/dm, measured on said third belt layer 105c in a circumferential direction thereof, close to the equatorial plane X-X of the tyre 100.

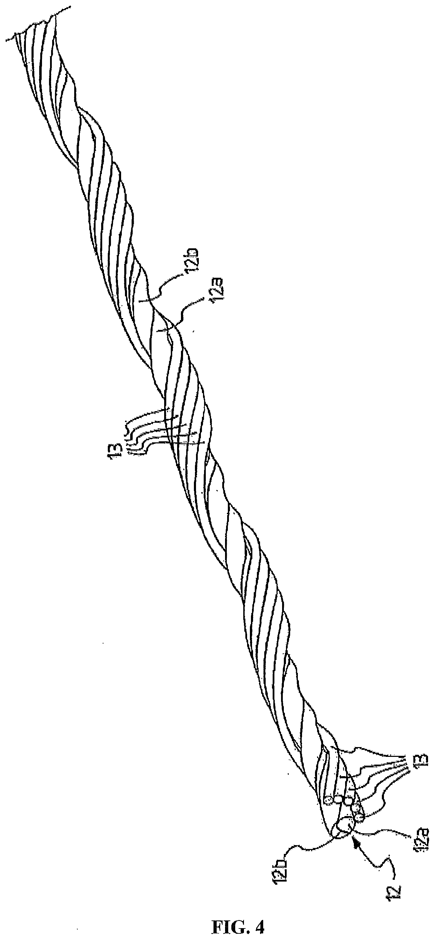

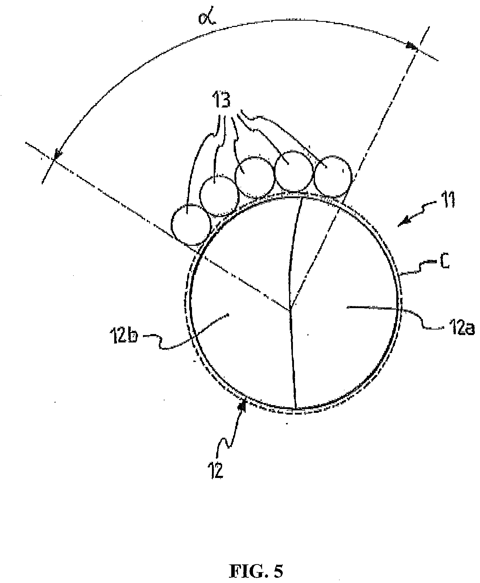

As shown in figures 4 and 5, each cord 11 used in the stone-guard layer 105d and/or in the main belt layers 105a, 105b of the tyre 100 of the present invention comprises a core 12 made of non-metallic material and a plurality of parallel metallic wires 13 helically wound around the core 12 with a predetermined winding pitch.

The core 12 comprises at least one elongated element.

Preferably, the core 12 is made of organic textile material. However, alternative embodiments of the tyre 100 of the present invention are foreseen in which the core 12 is made of an inorganic material, for example of a material comprising glass and/or carbon fibres.

Examples of organic textile materials from which the core 12 is made can be: polyethylene terephthalate, polyamide, aromatic polyamide, polyvinyl ester, polyvinyl alcohol, polyethylene naphthalate, polyketone, yarns from regenerated cellulose (for example rayon or lyocell), cotton and hybrids or mixtures thereof.

In an embodiment of the present invention, said organic textile material comprises polyethylene terephthalate.

Irrespective of the specific type of material used to make the core 12, such a material is suitably made sticky on the surface so as to offer suitable adhesion to the surrounding compound. Typically, the stickiness can be obtained by dipping the elongated element that will form the core 12 of the cord 11 in a solution comprising the adhesive.

With particular reference to figures 4 and 5, the core 12 is defined by two elongated elements 12a, 12b twisted onto one another with a predetermined twisting pitch. Preferably, each elongated element 12a, 12b is twisted on itself, preferably in the opposite direction to the direction with which it is twisted on the other elongated element 12b, 12a. Alternatively, the core 12 can be defined by a single elongated element twisted on itself with a predetermined twisting pitch, or by more than two elongated elements twisted onto one another with the same twisting pitch, or by a single elongated element not twisted.

The elongated elements 12a, 12b are preferably defined by respective long-shaped elements (or wires) made of organic or inorganic material, preferably textile.

In the embodiment illustrated herein, the metallic wires 13 are in direct contact with the core 12, i.e. between the core 12 and the metallic wires 13 there is no intermediate layer. In particular, there is no coating layer of the core 12.

In the example of figure 4 and 5, there are five metallic wires 13 and they are in a condition of mutual contact. However, alternative embodiments are foreseen in which the number of metallic wires 13 is comprised between two and eight, more preferably between three and seven, the aforementioned metallic wires 13 being also not in mutual contact.

The diameter of the metallic wires 13 is preferably comprised between about 0.22 mm and about 0.32 mm, more preferably between about 0.25. mm and about 0.30 mm, the extreme values being included.

For example, the diameter of said metallic wires 13 is, in a first embodiment equal to about 0.25 mm, in a second embodiment equal to about 0.28 mm, in a third embodiment equal to about 0.30 mm.

In any case, the metallic wires 13 are arranged so as not to completely surround the core 12. In particular, the metallic wires 13 are arranged around the core 12 so that, in any cross section of the cord 11, they are located at only an angular portion of an ideal circumference (indicated in figure 5 with C and with a broken line) that circumscribes the core 12. Such an angular portion is defined by an angle α that preferably is comprised between about 40° and about 270°, more preferably between about 130° and about 190°, for example equal to about 150°.

Preferably, the cord 11 has a diameter comprised between about 0.5 mm and about 2.5 mm, more preferably lower than about 1.5 mm.

For example, the cord 11 has a diameter equal to about 1.06 mm in a first embodiment thereof, equal to about 1.09 in a second embodiment thereof and equal to about 1.13 in a third embodiment thereof.

Preferably, the winding pitch of the metallic wires 13 is comprised between about 3 mm and about 16 mm, more preferably between about 5 mm and about 12.5 mm.

For example, the aforementioned winding pitch is equal to about 10 mm.

The cord 11 has an ultimate tensile strength greater than 2.5%, preferably greater than 3%, more preferably greater than 3.5%, for example equal to about 4.1%.

The metallic wires 13 are preferably all made of the same material.

In a preferred embodiment of the present invention, such a material is steel, more preferably NT (Normal Tensile), HT (High Tensile), SHT (Super High Tensile) or UHT (Ultra High Tensile) steel. Typically, such steel has a carbon content lower than about l'1%. Preferably, the carbon content is greater than or equal to about 0.7%. Typically, the steel has a Tensile Strength greater than about 2600 MPa. Typically, such tensile strength is lower than about 4500 MPa.

Preferably, the diameter of the core 12, the diameter of the metallic wires 13 and the winding pitch of the metallic wires 13 are selected so that the metallic wires 13 are inclined with respect to a direction substantially parallel to the equatorial plane X-X of the tyre 100 (which corresponds to the aforementioned substantially circumferential direction) by an angle comprised between 10° and 40°, more preferably between 15° and 30°.

The Applicant subjected three different embodiments of naked cord 11 to traction according to the aforementioned international method BISFA E6 and compared the behaviour of such cords with that of three types of cords (the aforementioned cords A, B and C) used in the stone-guard layers of tyres produced and marketed by the Applicant.

The aforementioned embodiments of the cord 11 were made using the same processes used in the past to make cords comprising only metallic wires, thus without encountering any problems either in the cutting stage or in the rubber-coating stage of the cords. In such stages it was suspected that the friction of the non-metallic wires against the rollers that are typically arranged in the calendering machine in a position close to one another in order to be able to obtain a rubber-coated fabric having the desired density and the presence of residual tensions inside the cords could have led to a not perfectly planar rubber-coated fabric.

In figure 1, the curves P1, P2 and P3 show the load-elongation diagram of the aforementioned three different embodiments of the cord 11 (the aforementioned cords P1, P2, and P3), whereas the curves A, B and C, on the other hand, refer to the cords A, B and C, respectively.

The cord A is used in the stone-guard layer of very wide tyres for trailers. The cord B is used in the stone-guard layer of tyres intended to be mounted on heavy load vehicles that are provided to travel on particularly hostile road surfaces and under heavy loads. The cord C is used in the stone-guard layers of tyres intended to be mounted in heavy load vehicles that are provided to travel over long journeys on the motorway.

The cords P1, P2 and P3 each comprise five metallic wires helically wound on a core made of textile material with a winding pitch of about 10 mm. In particular, the metallic wires are made of NT steel and each have a diameter equal, respectively, to 0.25 mm (curve P1), 0.28 mm (curve P2) and 0.30 mm (curve P3). The textile core comprises, in all three embodiments, two elongated elements made of polyethylene terephthalate (polyester 1670), twisted with 330 twists per metre, in turn twisted together again with 330 twists per metre.

The cord P1 thus has a construction that can be identified with the abbreviation PET1672/5x0.25; the cord P2 has a construction that can be identified with the abbreviation PET1672/5x0.28 and the cord P3 has a construction that can be identified with the abbreviation PET1672/5x0.30.

As already stated, the cords A, B and C, on the other hand, comprise only metallic wires. The cord A has a construction that can be identified with the abbreviation 3X4X0.22 HE; the cord B has a construction that can be identified with the abbreviation 5X0.35 HEP and the cord C has a construction that can be identified with the abbreviation 3+2X0.30.

The cords A, B, C, P1, P2 and P3, have the characteristics indicated in the table 1 given below (the direction of winding and/or twisting is always left-handed).

**TABLE 1**

| Cord | Pitch and direction | Cord diameter | Linear density | Rigidity | Ultimate tensile strength | Elongation at break | Break energy |
|---|---|---|---|---|---|---|---|
| | [mm] | [mm] | [ktex] | [TSU] | [N] | [%] | [J] |
| | | | | | | | |
| A | 2.99/6.22 | 1.16 | 3.91 | 45 | 1022 | 4.0 | 18 |
| B | 16S | 1.1 | 3.94 | 107 | 1054 | 5.9 | 39 |
| C | 16 | 0.89 | 2,72 | 72 | 999 | 1.49 | 7.5 |
| P1 | 10.2 | 1.06 | 2.38 | 43.4 | 815 | 4.17 | 15 |
| P2 | 10.27 | 1.09 | 2.86 | 58.2 | 1001 | 4.19 | 21 |
| P3 | 10.07 | 1.13 | 3.20 | 67.4 | 1163 | 4.1 | 23 |

TSU means Taber Stiffness Unit, i.e. unit of rigidity according to Taber, defined as bending moment and evaluated through a Taber testing device according to the standard BISFA E8.

The Applicant has found that, in the range of load values of interest (loads variable between 10% and 40 % of the ultimate tensile strength of the naked cords), the percentage elongation of the cords P1, P2 and P3 is comprised between about 0.7% and about 2.5%, more preferably between about 0.8% and about 2.3%, whereas the percentage elongation of the cords A, B and C is as follows: cord A between 1.5% and 2%, cord B between 0.3% and 1.2%, cord C between 0.25% and 0.5%.

The Applicant has taken, as indicator elements of the rigidity and drivability/comfort of the tyre of the invention in the aforementioned range of load values of interest, the angular coefficient and the linear correlation coefficient, respectively, of the straight lines that interpolate all of the points of the characteristic load-elongation curves of the various cords tested. The Applicant has indeed found that, if on the one hand the value of the angular coefficient identifies the amount of rigidity of the cords, and therefore the ability to withstand stresses providing a more or less accentuated elastic response, the value of the linear correlation coefficient is indicative of the gradualness and/or progressiveness with which such an elastic response is provided.

The Applicant has thus traced the aforementioned curves (figure 2) and found that curves P1, P2, and P3 are all interpolated by straight lines having an angular coefficient lower than about 30, whereas curves A, B and C are all interpolated by straight lines having an angular coefficient greater than 30. In particular, curve A has an angular coefficient greater than or equal to 54, curve B has an angular coefficient greater than 36, curve C has an angular coefficient greater than 74, whereas curve P1 has an angular coefficient equal to about 25, curve P2 has an angular coefficient equal to about 28 and curve P3 has an angular coefficient equal to about 28. As known, the angular coefficient is obtained by measuring, in the load-percentage elongation graph, the angle of inclination of the straight line that interpolates the points of the curve relative to each of the cords tested.

The aforementioned values confirmed that cords P1, P2 and P3 have high rigidity, to the great benefit of the integrity and structural strength of the tyre.

The Applicant has also found that the curves relative to cords P1, P2, P3 have a linear correlation coefficient lower than 0.990, more preferably lower than about 0.995, even more preferably lower than about 0.990, whereas the curves relative to cords A, B and C all have a linear correlation coefficient substantially equal to 1. In particular, curve P1 has a linear correlation coefficient equal to 0.9785, curve P2 has a linear correlation coefficient equal to 0.9821, curve P3 has a linear correlation coefficient equal to 0.9853, whereas curve A has a linear correlation coefficient equal to 0.9987, curve B has a linear correlation coefficient equal to 0.9997, curve C has a linear correlation coefficient equal to 0.9992.

Advantageously, the curves relative to cords P1, P2 and P3 all have upward-facing concavities. The deformation of cords P1, P2 and P3 thus takes place in a particularly gradual and progressive manner, thus enhancing the comfort and progressive response.

The aforementioned values have confirmed that the cords P1, P2 and P3 respond to stresses in a very gradual and progressive manner, to the great benefit of comfort and drivability of the tyre.

In order to calculate the linear correlation coefficient the Applicant followed the method described below.

The different cords were subjected to traction according to the method BISFA E6. Then curves A, B, C, P1, P2 and P3 were traced and for each cord the ultimate tensile strength was determined. For each cord the range defined by load values comprised between 10% and 40% of the respective ultimate tensile strength was then considered, and the graph of figure 2 was then traced. The equations of the single curves were then obtained and, consequently, the linear correlation coefficient. Specifically:
- the equation obtained for curve A is 54.365x-72.988 and the linear correlation coefficient is r²=0.9987
- the equation obtained for curve B is 36.494x-4.0256 and the linear correlation coefficient is r²=0.9997;
- the equation obtained for curve C is 74.898x-7.0002 and the linear correlation coefficient is r²=0.9992;
- the equation obtained for curve P1 is 25.378x-18.971 and the linear correlation coefficient is r²=0.9785;
- the equation obtained for curve P2 is 28.469x-18.46 and the linear correlation coefficient is r²=0.9821;
- the equation obtained for curve P3 is 28.31x-15.633 and the linear correlation coefficient is r²=0.9853.

Basically, the Applicant has observed that in the aforementioned range of load values of interest the cords P1, P2 and P3 have a much lower rigidity than that of the cords A, B, C and, unlike these, provide a non-linear response to the loads which the tyre are subjected to in normal conditions of use (in particular variable according to a curve having an upward-facing concavity). According to the Applicant, these special features of the cords P1, P2 and P3 provide the tyre with optimal behaviour in terms of rigidity, comfort, and progressive response. The provision in the cords P1, P2 and P3 of a core of non-metallic wires also allows the tyre to be reconstructable, as well as the weight of the tyre itself to be kept low.

In order to evaluate the behaviour of the tyre 100 of the present invention both in terms of rigidity and in terms of drivability and comfort, the Applicant has carried out a number of comparative indoor and on-the-road tests using tyres comprising a stone-guard layer provided with cords P1 (construction 5X0.25) with density 45 (such tyres thus corresponding to the tyre 100 of the present invention, hereafter "invention") and known tyres comprising a stone-guard layer including a plurality of cords C (construction 3+2X0.30) with density 50 (hereafter tyres C or "comparison"), which are known for their excellent behaviour on the road and highly appreciated by customers.

In both cases, the measurement of the tyres is 315/80 R22.5. Such tyres thus were different from each other only for the different type of cord used in the respective stone-guard layers.

The characteristics of the stone-guard layers comprising the cords P1 and the comparison cords C are shown in table 2 below.

**TABLE 2**

| | Fabric weight (g/m²) | Stone-guard width (mm) | Stone-guard length (mm) | Stone-guard total weight (Kg) |
|---|---|---|---|---|
| Invention | 2545 | 170 | 3170 | 1.37 |
| comparison | 3080 | | | 1.66 |

The tyres of the invention and the comparison tyres were subjected to an indoor test of detachment of the belt structure. The test consists of making the tyres turn under load starting from a certain speed and increasing the speed until the belt structure detaches. The time taken to obtain the detachment of the belt structure in the comparison tyre was taken as reference.

Having evaluated with an index 100 the minimum time of resistance to detachment to pass the test, in the tyre of the invention the detachment took place at a time 147, whereas in the comparison tyre it took place at a time 145. Both tyres passed the test successfully.

The tyres of the invention and the comparison were also subjected to a penetration test according to the standard ASTM F414/09. Such a test allows to determine the energy required to completely penetrate a plunger having a semispherical end (of diameter equal to 38.10 mm) in the tread band of the inflated tyre (at 8.6 bar) until occurs a break, a loss of pressure, a sudden reduction of force in the plunger or until the rim is reached. The plunger is moved with a speed of 50 mm/min. The test was passed.

The tyres of the invention and the comparison tyres were also subjected to a laceration test. Such a test consists of mounting the tyres on a loaded tractor and placed under set braking. The tractor is pulled on a white road with a surface provided with gravel having controlled granulometry. The result of the test is both visual (the laceration of the tread band is evaluated by the eye) and numerical (the tyre is weighed before and after the test to evaluate the loss of weight that has occurred).

At the end of the test the Applicant found in the tyre of the invention a weight loss of 13% lower than that of the already excellent reference tyre, demonstrating the greater structural strength of the tyre of the invention.

The indoor tests thus confirmed that the tyre of the invention has excellent characteristics of structural strength.

The tyres of the invention and the comparison were finally tested on the road to verify their behaviour during travel.

They were mounted on an Iveco Tralis 500 and they were tested by a test driver who drove the same mixed motorway journey (with bends, straights, climbs and descents). The test driver expressed a series of overall judgements on the behaviour of the tyres.

The behaviour of the comparison tyres was taken as reference. Table 3 below indicates the parameters evaluated by the test driver and a symbol +, -, =.

The symbol "+" indicates an improvement with respect to the comparison tyre, the symbol "-" indicates a worsening and the symbol "=" indicates that the test driver did not notice any difference with respect to the comparison tyre.

**TABLE 3**

| | | |
|---|---|---|
| Travel in a straight line | | Invention |
| | Centering on the motorway | = |
| | Centering on a motorway undulating surface | = |
| | Load on steering wheel about the "0" | = |
| | Driving tracks effect | = |
| Drivability | Quickness of response | = |
| | Progressive response | + |
| | Centering in bends | = |
| | Centering in small-angle bends | = |
| Comfort | Softness | + |
| | Rigidity | = |
| | Backlash on steering wheel | + |

The test driver gave a very good overall evaluation of the behaviour of the tyre of the invention.

In particular, the tests carried out by the test driver highlighted how the tyre of the invention has an overall behaviour that is equal to or better than that of the already excellent comparison tyre selected.

More specifically, the test driver considered that, during travel in a straight line, the tyre of the invention has substantially identical behaviour to that of the comparison tyre. A substantially similar judgement was also given regarding the parameters relative to drivability and comfort, with the exception of progressive response, softness and backlash on the steering wheel, for which the test driver actually found better results than those of the comparison tyre.

The excellent behaviour in terms of drivability and comfort of the tyre 100 of the present invention was also found in further on-the-road comparative tests carried out by the Applicant.

In such tests the Applicant compared the behaviour of tyres comprising a stone-guard layer provided with cords P2 (construction 5X0.28) with density 45 (hereafter: tyres of the invention) with that of tyres (known for their excellent behaviour on the road and highly appreciated by customers) comprising a stone-guard layer provided with cords C (construction 3+2X0.30) with density 45 (hereafter: comparison tyres).

The tyres of the invention and the comparison tyres were mounted on a Setra S 415 HD bus and tested as complete replacements (two front tyres and four rear tyres, matched on the same axle) on a dry road surface. The size of the tyres of the invention and of the comparison tyres was 295/80 R22.5.

Also in this case the test driver drove the same mixed motorway journey (with bends, straights, climbs and descents).

The test driver expressed the overall judgements shown in table 4, also in this case taking the behaviour of the comparison tyres as reference.

**TABLE 4**

| | | |
|---|---|---|
| Travel in a straight line | | Invention |
| | Centering on the motorway | + |
| | Centering on a motorway undulating surface | = |
| | Load on steering wheel about the "0" | = |
| | Driving tracks effect | = |
| Drivability | Progressive response | + |
| | Centering in bends | = |
| | Centering in small-angle bends | = |
| | Realignment after change of lane (overtaking) | = |
| Lateral stability | Pliability | = |
| | Progressive load transfer | |
| Roadholding | Drift | = |
| Comfort | Softness | + |
| | Rigidity | + |
| | Noise generation in a straight line | = |
| | Noise generation in a bend | + |
| | Roughness | + |
| | Rumble | + |

These tests also highlighted how the tyre of the invention has overall behaviour that is equal to or better than that of the already excellent comparison tyre selected.

More specifically, the test driver gave a substantially similar judgement regarding the parameters relative to travel in a straight line, lateral stability and road-hold, but highlighting better behaviour of the tyre of the invention with respect to the comparison tyre with reference to centering on the motorway. An analogous substantially similar judgement was given regarding the parameters relative to drivability, with the exception of progressive response, which was evaluated to be better with the tyre of the invention. On the other hand, a better judgement was given for all the entries relating to comfort, with the sole exception of noise generation in a straight line, which was judged to be substantially the same as that of the comparison tyre.

The results of the tests carried out by the Applicant confirm that with the tyre 100 of the present invention, thanks to the particular geometry and structure of the cords used in the belt structure, it was possible to obtain excellent behaviour in terms of integrity and structural strength and an overall better behaviour in terms of drivability and comfort, as well as achieving the desired reconstructibility.

Advantageously, this result was obtained also achieving a significant reduction in weight, thanks to the fact that it is possible to use, for the cords of the stone-guard layer, a smaller number of metallic wires and a core made of light material. This obviously means a corresponding reduction of production costs of the tyre.

The present invention has been described with reference to some preferred embodiments. Various changes can be made to the embodiments described above, still remaining within the scope of protection of the invention, defined by the following claims.

## Claims

1. Tyre (100) for heavy load vehicle wheels, comprising:
- a carcass structure (100a);
- a belt structure (105) arranged in a radially outer position with respect to the carcass structure (100a);
- a tread band (106) arranged in a radially outer position with respect to said belt structure (105);
wherein said belt structure (105) comprises at least one belt layer comprising a plurality of reinforcing cords (11) inclined with respect to a substantially circumferential direction, said at least one belt layer being a stone-guard layer (105d) arranged in the belt structure (105) in a radially outermost position, wherein each reinforcing cord (11) of said plurality of reinforcing cords (11) comprises:
- a core (12) made of non-metallic material, and
- a plurality of metallic wires (13), substantially parallel to one another and helically wound around said core (12) with a predetermined winding pitch;
wherein said core (12) comprises at least two elongated elements (12a, 12b) twisted on one another or a single elongated element twisted on itself;
wherein said metallic wires (13) are arranged around said core (12) so that, in any cross section of the reinforcing cord (11), they are located at just an angular portion of an ideal circumference that circumscribes the core (12), each of said metallic wires (13) being parallel to the other metallic wires (13) along said ideal circumference;
wherein said reinforcing cord (11), when subjected to variable loads of between 10% and 40% of the ultimate tensile strength thereof, undergoes an elongation that varies according to a curve having, in a portion of a load-percentage elongation graph corresponding to said variable loads, a linear correlation coefficient lower than about 0.990, the points of said curve being interpolated by a straight line having an angular coefficient lower than about 30.

2. Tyre (100) according to claim 1, wherein said reinforcing cord (11), when subjected to said variable loads, undergoes a percentage elongation which is variable between about 0.7% and about 2.5%.

3. Tyre (100) according to any one of the previous claims, wherein said angular portion is defined by an angle comprised between about 40° and about 270°.

4. Tyre (100) according to any one of the previous claims, wherein the number of said metallic wires (13) is comprised between two and eight.

5. Tyre (100) according to any one of the previous claims, wherein the number of said metallic wires (13) is equal to five.

6. Tyre (100) according to any one of the previous claims, wherein said metallic wires (13) are in a condition of substantially mutual contact.

7. Tyre (100) according to any one of the previous claims, wherein the diameter of said metallic wires (13) is comprised between about 0.22 mm and about 0.32 mm, preferably between about 0.25 and about 0.30, the extreme values being included.

8. Tyre (100) according to any one of the previous claims, wherein said reinforcing cord (11) has a diameter comprised between about 0.5 mm and about 2.5 mm.

9. Tyre (100) according to any one of the previous claims, wherein said winding pitch is comprised between about 3 mm and about 16 mm.

10. Tyre (100) according to any one of the previous claims, wherein said core (12) comprises a fibrous material.

11. Tyre (100) according to claim 10, wherein said fibrous material comprises an inorganic material selected from glass and/or carbon fibres or an organic material selected from: polyethylene terephthalate, polyamide, aromatic polyamide, polyvinyl ester, polyvinyl alcohol, polyethylene naphthalate, polyketone, yarns from regenerated cellulose, cotton and hybrids or mixtures thereof.

12. Tyre (100) according to any one of the previous claims, wherein said belt structure (105) comprises a first main belt layer (105a) comprising a plurality of reinforcing elements oriented along a first direction inclined with respect to said substantially circumferential direction and, in a radially outer position with respect to said first main belt layer (105a), a second main belt layer (105b) comprising a plurality of reinforcing elements oriented along a second direction that intersects said first direction.

13. Tyre (100) according to claim 12, wherein each reinforcing element of said first main belt layer (105a) and second main belt layer (105b) consists of a respective reinforcing cord (11) of said plurality of reinforcing cords (11).

14. Tyre (100) according to claim 12 or 13, wherein said belt structure (105) comprises at least one reinforced band-like element (105c) arranged in a radially outer position with respect to said second main belt layer (105b), wherein said at least one reinforced band-like element (105c) comprises a plurality of reinforcing elements arranged according to said substantially circumferential direction.

15. Tyre (100) according to claim 14, comprising two reinforced band-like elements (105c), each reinforced band-like element (105c) of said two reinforced band-like elements (105c) being arranged at a respective axial end portion of said second main belt layer (105b).

16. Tyre (100) according to claim 15, wherein said at least one stone-guard layer (105d) extends between said two reinforced band-like elements (105c).

17. Tyre (100) according to any one of claims 14 to 16, wherein said at least one stone-guard layer (105d) extends at least partially over said at least one reinforced band-like element (105c).

## Patentansprüche

1. Reifen (100) für Räder von Schwerlastfahrzeugen, umfassend:
- eine Karkassenstruktur (100a);
- eine Gürtelstruktur (105), die in Bezug auf die Karkassenstruktur (100a) in einer radial äußeren Position angeordnet ist;
- einen Laufflächenring (106), der in Bezug auf die Gürtelstruktur (105) in einer radial äußeren Position angelegt ist;
wobei die Gürtelstruktur (105) zumindest eine Gürtellage umfasst, die eine Vielzahl von Verstärkungskorden (11) umfasst, die in Bezug auf eine im Wesentlichen umlaufende Richtung schräg stehen, wobei die zumindest eine Gürtellage eine Steinschutzlage (105d) ist, die in der Gürtelstruktur (105) in einer radial äußersten Position angeordnet ist, wobei jeder Verstärkungskord (11) der Vielzahl von Verstärkungskorden (11) umfasst:
- einen Kern (12) aus nichtmetallischem Material, und
- eine Vielzahl von Metalldrähten (13), die im Wesentlichen parallel zueinander und schraubenförmig um den Kern (12) mit einem vorbestimmten Wickelschritt gewickelt sind;
wobei der Kern (12) zumindest zwei längliche Elemente (12a, 12b) umfasst, die miteinander verdrillt sind, oder ein einzelnes längliches Element, das in sich selbst verdrillt ist;
wobei die Metalldrähte (13) so um den Kern (12) herum angeordnet sind, dass sie, in jedem Querschnitt des Verstärkungskords (11), an einem gewinkelten Abschnitt eines idealen Umfangs, der den Kern (12) umschreibt, angeordnet sind, wobei jeder der Metalldrähte (13) parallel zu den anderen Metalldrähten (13) entlang des idealen Umfangs ist;
wobei der Verstärkungskord (11), wenn er variablen Lasten zwischen 10 % und 40 % der Zugfestigkeit ausgesetzt wird, eine Dehnung erfährt, die gemäß einer Kurve variiert, die in einem Abschnitt einer Last-Prozent-Dehnungskurve entsprechend den variablen Lasten einen linearen Korrelationskoeffizient aufweist, der niedriger ist als etwa 0,990, wobei die Punkte der Kurve durch eine gerade Linie interpoliert werden, die einen Winkelkoeffizienten von weniger als etwa 30 aufweist.

2. Reifen (100) nach Anspruch 1, wobei der Verstärkungskord (11), wenn er den variablen Lasten unterworfen wird, eine prozentmäßige Dehnung erfährt, die zwischen etwa 0,7 % und etwa 2,5 % variabel ist.

3. Reifen (100) nach einem der vorhergehenden Ansprüche, wobei der Winkelabschnitt durch einen Winkel definiert wird, der zwischen etwa 40° und etwa 270° beträgt.

4. Reifen (100) nach einem der vorhergehenden Ansprüche, wobei die Anzahl der Metalldrähte (13) zwischen zwei und acht beträgt.

5. Reifen (100) nach einem der vorhergehenden Ansprüche, wobei die Anzahl der Metalldrähte (13) gleich fünf ist.

6. Reifen (100) nach einem der vorhergehenden Ansprüche, wobei die Metalldrähte (13) im Wesentlichen in einem Zustand wechselseitigen Kontakts sind.

7. Reifen (100) nach einem der vorhergehenden Ansprüche, wobei der Durchmesser der Metalldrähte (13) zwischen etwa 0,22 mm und etwa 0,32 mm, vorzugsweise zwischen etwa 0,25 und etwa 0,30, beträgt, wobei die Extremwerte eingeschlossen sind.

8. Reifen (100) nach einem der vorhergehenden Ansprüche, wobei der Verstärkungskord (11) einen Durchmesser aufweist, der zwischen etwa 0,5 mm und etwa 2,5 mm beträgt.

9. Reifen (100) nach einem der vorhergehenden Ansprüche, wobei der Wickelschritt zwischen etwa 3 mm und etwa 16 mm beträgt.

10. Reifen nach einem der vorhergehenden Ansprüche, wobei der Kern (12) ein Fasermaterial umfasst.

11. Reifen (100) nach Anspruch 10, wobei das Fasermaterial ein anorganisches Material ausgewählt aus Glas- und/oder Kohlenstofffasern oder ein organisches Material umfasst, das ausgewählt ist aus: Polyethylenterephthalat, Polyamid, aromatisches Polyamid, Polyvinylester, Polyvinylalkohol, Polyethylennaphthalat, Polyketon, Garne aus regenerierter Zellulose, Baumwolle und Hybride oder Mischungen davon.

12. Reifen (100) nach einem der vorhergehenden Ansprüche, wobei die Gürtelstruktur (105) eine erste Haupt-Gürtellage (105a) mit einer Vielzahl von Verstärkungselementen, die entlang einer ersten Richtung orientiert sind, die in Bezug auf die im Wesentlichen umlaufende Richtung und in einer radial äußeren Position in Bezug auf die erste Haupt-Gürtellage (105a) schräg ist, und eine zweite Haupt-Gürtellage (105b) umfassend eine Vielzahl von Verstärkungselementen umfasst, die entlang einer zweiten Richtung orientiert sind, die die erste Richtung schneidet.

13. Reifen (100) nach Anspruch 12, wobei jedes Verstärkungselement der ersten Haupt-Gürtellage (105a) und der zweiten Haupt-Gürtellage (105b) aus einem jeweiligen Verstärkungskord (11) der Vielzahl von Verstärkungskorden (11) besteht.

14. Reifen (100) nach Anspruch 12 oder 13, wobei die Gürtelstruktur (105) zumindest ein verstärktes streifenförmiges Element (105c) umfasst, das in einer radial äußeren Position in Bezug auf die zweite Haupt-Gürtellage (105b) angeordnet ist, wobei das zumindest eine verstärkte streifenförmige Element (105c) eine Vielzahl von Verstärkungselementen umfasst, die im Wesentlichen gemäß der Umfangsrichtung angeordnet sind.

15. Reifen (100) nach Anspruch 14, umfassend zwei verstärkte streifenförmige Elemente (105c), wobei jedes verstärkte streifenförmige Element (105c) der zwei verstärkten streifenförmigen Elemente (105c) an einem jeweiligen axialen Endabschnitt der zweiten Haupt-Gürtellage (105b) angeordnet ist.

16. Reifen (100) nach Anspruch 15, wobei die zumindest eine Steinschutzlage (105d) sich zwischen den zwei verstärkten streifenförmigen Elementen (105c) erstreckt.

17. Reifen (100) nach einem der Ansprüche 14 bis 16, wobei die zumindest eine Steinschutzlage (105d) sich zumindest zum Teil über das zumindest eine verstärkte streifenförmige Element (105c) erstreckt.

## Revendications

1. Pneu (100) pour roues de véhicule poids lourd, comprenant :
- une structure de carcasse (100a) ;
- une structure de ceinture (105) agencée dans une position radialement extérieure par rapport à la structure de carcasse (100a) ;
- une bande de roulement (106) agencée dans une position radialement extérieure par rapport à ladite structure de ceinture (105) ;
dans lequel ladite structure de ceinture (105) comprend au moins une couche de ceinture comprenant une pluralité de câblés de renforcement (11) inclinés par rapport à une direction sensiblement circonférentielle, ladite au moins une couche de ceinture étant une couche de type pare-pierres (105d) agencée dans la structure de ceinture (105) dans une position radialement la plus à l'extérieur, où chaque câblé de renforcement (11) de ladite pluralité de câblés de renforcement (11) comprend :
- une âme (12) réalisée en matériau non métallique, et
- une pluralité de fils métalliques (13), sensiblement parallèles les uns aux autres et enroulés en hélice autour de ladite âme (12) avec un pas d'enroulement prédéterminé ;
dans lequel ladite âme (12) comprend au moins deux éléments allongés (12a, 12b) torsadés l'un sur l'autre ou un seul élément allongé torsadé sur lui-même ;
dans lequel lesdits fils métalliques (13) sont agencés autour de ladite âme (12) de sorte que, dans toute section transversale du câblé de renforcement (11), ils soient situés uniquement au niveau d'une partie angulaire d'une circonférence idéale qui circonscrit l'âme (12), chacun desdits fils métalliques (13) étant parallèle aux autres fils métalliques (13) le long de ladite circonférence idéale ;
dans lequel ledit câblé de renforcement (11), lorsqu'il est soumis à des charges variables comprises entre 10% et 40% de sa résistance ultime à la traction, subit un allongement qui varie selon une courbe ayant, dans une partie d'un graphique d'allongement en pourcentage-charge correspondant auxdites charges variables, un coefficient de corrélation linéaire inférieur à environ 0,990, les points de ladite courbe étant interpolés par une ligne droite ayant un coefficient angulaire inférieur à environ 30.

2. Pneu (100) selon la revendication 1, dans lequel ledit câblé de renforcement (11), lorsqu'il est soumis auxdites charges variables, subit un allongement en pourcentage qui est variable entre environ 0,7% et environ 2,5%.

3. Pneu (100) selon l'une quelconque des revendications précédentes, dans lequel ladite partie angulaire est définie par un angle compris entre environ 40° et environ 270°.

4. Pneu (100) selon l'une quelconque des revendications précédentes, dans lequel le nombre desdits fils métalliques (13) est compris entre deux et huit.

5. Pneu (100) selon l'une quelconque des revendications précédentes, dans lequel le nombre desdits fils métalliques (13) est égal à cinq.

6. Pneu (100) selon l'une quelconque des revendications précédentes, dans lequel lesdits fils métalliques (13) sont dans un état de contact sensiblement mutuel.

7. Pneu (100) selon l'une quelconque des revendications précédentes, dans lequel le diamètre desdits fils métalliques (13) est compris entre environ 0,22 mm et environ 0,32 mm, de préférence entre environ 0,25 et environ 0,30, les valeurs extrêmes étant incluses.

8. Pneu (100) selon l'une quelconque des revendications précédentes, dans lequel ledit câblé de renforcement (11) a un diamètre compris entre environ 0,5 mm et environ 2,5 mm.

9. Pneu (100) selon l'une quelconque des revendications précédentes, dans lequel le pas d'enroulement est compris entre environ 3 mm et environ 16 mm.

10. Pneu (100) selon l'une quelconque des revendications précédentes, dans lequel ladite âme (12) comprend un matériau fibreux.

11. Pneu (100) selon la revendication 10, dans lequel ledit matériau fibreux comprend un matériau inorganique choisi parmi des fibres de verre et/ou de carbone ou un matériau organique choisi parmi : le polyéthylène téréphtalate, le polyamide, le polyamide aromatique, l'ester polyvinylique, l'alcool polyvinylique, le polyéthylène naphtalate, la polycétone, des fils provenant de cellulose régénérée, le coton et des composés hybrides ou des mélanges de ceux-ci.

12. Pneu (100) selon l'une quelconque des revendications précédentes, dans lequel ladite structure de ceinture (105) comprend une première couche de ceinture principale (105a) comprenant une pluralité d'éléments de renforcement orientés le long d'une première direction inclinée par rapport à ladite direction sensiblement circonférentielle et, dans une position radialement extérieure par rapport à ladite première couche de ceinture principale (105a), une deuxième couche de ceinture principale (105b) comprenant une pluralité d'éléments de renforcement orientés le long d'une deuxième direction qui coupe ladite première direction.

13. Pneu (100) selon la revendication 12, dans lequel chaque élément de renforcement de ladite première couche de ceinture principale (105a) et de ladite deuxième couche de ceinture principale (105b) est constitué d'un câblé de renforcement respectif (11) de ladite pluralité de câblés de renforcement (11).

14. Pneu (100) selon la revendication 12 ou 13, dans lequel ladite structure de ceinture (105) comprend au moins un élément en forme de ruban renforcé (105c) agencé dans une position radialement extérieure par rapport à ladite deuxième couche de ceinture principale (105b), où ledit au moins un élément en forme de bande renforcé (105c) comprend une pluralité d'éléments de renforcement agencés selon ladite direction essentiellement circonférentielle.

15. Pneu (100) selon la revendication 14, comprenant deux éléments en forme de ruban renforcés (105c), chaque élément en forme de ruban renforcé (105c) desdits deux éléments en forme de ruban renforcés (105c) étant agencé au niveau d'une partie d'extrémité axiale respective de ladite deuxième couche de ceinture principale (105b).

16. Pneu (100) selon la revendication 15, dans lequel ladite au moins une couche de type pare-pierres (105d) s'étend entre lesdits deux éléments en forme de ruban renforcés (105c).

17. Pneu (100) selon l'une quelconque des revendications 14 à 16, dans lequel ladite au moins une couche de type pare-pierres (105d) s'étend au moins partiellement sur ledit au moins un élément en forme de ruban renforcé (105c).
